(19) Europäisches Patentamt / European Patent Office / Office européen des brevets

(11) **EP 3 607 831 B1**

(12) **EUROPEAN PATENT SPECIFICATION**

(45) Date of publication and mention
of the grant of the patent:
**05.05.2021 Bulletin 2021/18**

(51) Int Cl.:
*A23L 3/375* *(2006.01)*      *A23B 4/048* *(2006.01)*
*A23B 4/052* *(2006.01)*      *A23B 4/09* *(2006.01)*

(21) Application number: **19189979.8**

(22) Date of filing: **05.08.2019**

(54) **CRYOGENIC SMOKING PROCESS AND RELATIVE SYSTEM**

KRYOGENES RÄUCHERVERFAHREN UND DAZUGEHÖRIGES SYSTEM

PROCEDE DE FUMAGE CRYOGENIQUE ET SYSTEME CORRESPONDANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2018 IT 201800008046**

(43) Date of publication of application:
**12.02.2020 Bulletin 2020/07**

(73) Proprietor: **Medicair Food S.r.l.**
**20149 Milano (MI) (IT)**

(72) Inventor: **BACCI, Alessandro**
**30173 MESTRE (VE) (IT)**

(74) Representative: **Perani & Partners S.p.A.**
**Piazza Armando Diaz, 7**
**20123 Milano (IT)**

(56) References cited:
EP-A2- 2 005 831      WO-A1-96/25854
GB-A- 781 591         US-A- 3 747 513
US-A1- 2008 072 770

• DATABASE WPI Week 201230 Thomson
Scientific, London, GB; AN 2012-D50093
XP002787720, & KR 2012 0001913 U (JEONG H L)
14 March 2012 (2012-03-14)
• DATABASE WPI Week 200516 Thomson
Scientific, London, GB; AN 2005-145314
XP002787721, & JP 2005 013183 A (HASEGAWA
Y) 20 January 2005 (2005-01-20)
• DATABASE WPI Week 199117 Thomson
Scientific, London, GB; AN 1991-121817
XP002787722, & JP H03 61446 A (NIPPON KOKAN
KK) 18 March 1991 (1991-03-18)

**Description**

This invention relates to a cryogenic smoking process.

The invention also relates to a cryogenic smoking system.

In the state of the art such systems are known, for example EP 2 005 831 describes a cooking and smoking apparatus for cooking and smoking foodstuffs comprises cooking chamber means for containing said foodstuffs, heating means, positioned in said cooking chamber means, for heating said foodstuffs, smoking chamber means for producing smoking smoke for smoking said foodstuffs and conduit means for connecting said cooking chamber means to said smoking chamber means. Other examples are the apparatus described in JP H03 61446 and in US 3 747 513. The latter document describes an apparatus that comprises a housing that is divided into three chambers, one above the other. The lower chamber is the processing chamber, the upper chamber is the air and/or smoke distribution chamber, and the intermediate chamber is a plenum chamber. Suitable openings interconnect the several chambers, and an air inlet extends from a point externally of the housing to the intermediate plenum chamber. An air outlet and heating means are disposed in the distribution chamber, while means for supplying smoke extend from a point externally of the housing to the processing chamber. A blower is mounted in the distribution chamber and is driven in such manner as to withdraw air and/or smoke from the processing chamber and air from the plenum chamber to the distribution chamber for eventual recycling to the processing chamber, or to the air outlet.

Furthermore, a method for making smoked bacon is disclosed in WO 96/25854, wherein a cold gas can be used to cool the surface of the pieces of bacon, pressing the pieces in a bacon press, whereafter the pieces are taken out of the press, smoked and heat treated.

As it is well known, there are currently two main techniques for this type of smoking, and in particular hot smoking and cold smoking.

In particular, in hot smoking, depending on the type of product to be smoked, the temperature is often in the range of 65°C to 80°C, for a period of time varying between 1 hour and 24 hours, according to the aroma which is to be imparted to the product.

On the other hand, in cold smoking, again depending on the type of product to undergo smoking, the temperature of the process is kept between 20°C and 30°C for a period of time varying between a few hours and several days, according to the aroma which is to be imparted to the product.

It is also known that the smoke is characterised by a gaseous phase, rich in water vapour, carbon dioxide, and volatile substances including formaldehyde, phenol, acetic acid, ethyl alcohol, and organic acids, which form part of the smoking process, and a particle phase, in which there are, amongst the various elements, the toxic substances such as the aromatic polycyclic hydrocarbons (APH).

The presence of these substances depends in particular on the quantity of oxygen (the greater the presence of oxygen, the smaller is the formation of hydrocarbons), and on the temperature (the higher the temperature in the combustion chamber, the greater is the production of oncogene substances).

There are also other smoking processes which enable the processing times to be shortened. They are, in particular, electrostatic smoking and smoking with liquid smoke.

In both cases there is no direct contact between the smoke produced by wood chips and the food product.

It is also known that cryogenic smoking consists in a smoking process at extremely low temperatures (between -5°C and +5°C) and it is performed in the absence of oxygen in the smoke-product contact chamber unlike the wood chip combustion cell, inside of which the oxygen content is greater than 20.9% (ambient average).

The products smoked with this type of smoking process are better from the organoleptic, chemical, nutritional, microbiological point of view and in terms of shelf-life, compared with the products smoked with traditional hot and cold methods, using smoke obtained from the burning of wood chips.

Use can be made in the cryogenic smoking process of types of wood which differ in terms of the flavour which they are able to give to the product subjected to smoking, and, above all, any type of food product can be smoked.

Unlike traditional smoking, the cryogenic smoking process according to the invention completely prevents the coagulation of albumins, which induce the formation of a surface crust on the food product, which leads to an alteration of organoleptic characteristics, with possible putrefaction and decomposition processes.

In light of the above, the invention comprises a cryogenic smoking process which allows a quality of the final product to be obtained which is significantly better than that of the traditional solutions.

The specific object of this invention is therefore a cryogenic smoking process comprising the following steps:

- arranging the products to be subjected to cryogenic smoking inside an isolated smoking chamber, preferably on positioning grids;
- introducing inert cryogenic gas in said chamber, until a pre-determined smoking temperature is reached;
- introducing the smoking smoke, said smoke being cooled by the inert cryogenic gas previously introduced in said chamber;

- once the smoking of the product is finished, discharging the cryogenic gas from inside the chamber and extracting the smoked product.

Preferably, according to the invention, said cryogenic gas is inertized by an inert gas, in particular argon and/or nitrogen.

Again according to the invention, the smoking smoke is realized in a combustion cell, within which air enriched with oxygen is introduced (nitrogen 50% - 80%/oxygen 20% - 50%).

Further, according to the invention, the smoke is preferably obtained by burning without flame wood chips.

The invention also relates to a cryogenic smoking system, said system comprising:

- an isolated smoking chamber, provided with means for positioning the product to be subjected to smoking, a supply of inert cryogenic gas, said supply being provided with a solenoid valve, a temperature probe, a cryogenic distribution system, and with an access for the smoke and for the inert gas;
- a combustion cell, provided with a supply of air enriched with oxygen, with a heating system, with an outlet for the fumes; and
- a system for the transfer of fumes from said combustion cell to said smoking chamber, as defined in claim 6.

Preferably, according to the invention, said cryogenic distribution system of said chamber is equipped with a fan.

Again according to the invention, said solenoid valve is preferably controlled by a PLC.

Again according to the invention, said combustion cell is equipped with a removable top cover, for inserting the chips, and through the cover the supply is realized.

Further, according to the invention, said heating system of said cell comprises an electrical resistance.

Lastly, according to the invention, said system for the transfer of fumes from said cell to said smoking chamber preferably comprises a Venturi system.

The present invention is now described, by way of example and without limiting the scope of the invention, with reference to the accompanying drawings which illustrate preferred embodiments of it, in which:

Figure 1 is a first schematic view of a cryogenic smoking system according to the invention;
Figure 2 is a second schematic view of the cryogenic smoking system according to the invention; and
Figure 3 shows a detail of Figure 2.

As mentioned above, the invention relates to a cryogenic smoking process, which comprises the use of inert cryogenic gases (argon and/or nitrogen) in order to reduce and keep very low the temperature of the product to be smoked, in the absence of oxygen. Moreover, the process according to the invention enables a mixture of nitrogen and oxygen to be maintained with a percentage of oxygen greater than 20.9% inside the combustion cell of the chips.

In the process according to the invention, the smoke is produced by means of incomplete combustion, induced by an electrical resistance, in an external unit (combustion cell), and then transferred, by mean of a Venturi system, inside a smoking chamber.

Also, in the process according to the invention, as mentioned, an inert gas (argon and/or nitrogen) as a means for conveying the smoke inside the chamber, thereby guaranteeing the absence of oxygen inside the smoking chamber.

In order to reduce the formation of aromatic polycyclic hydrocarbons, during the combustion of the chips inside the combustion cell, air enriched with oxygen is introduced (between 22% and 50%, as a function of the type of wood used).

With reference to the accompanying drawings, it can be seen how the smoking system according to the invention, indicated generically with reference numeral 100, comprises a combustion cell 1, for the generation of smoke, an isolated smoking chamber 2.

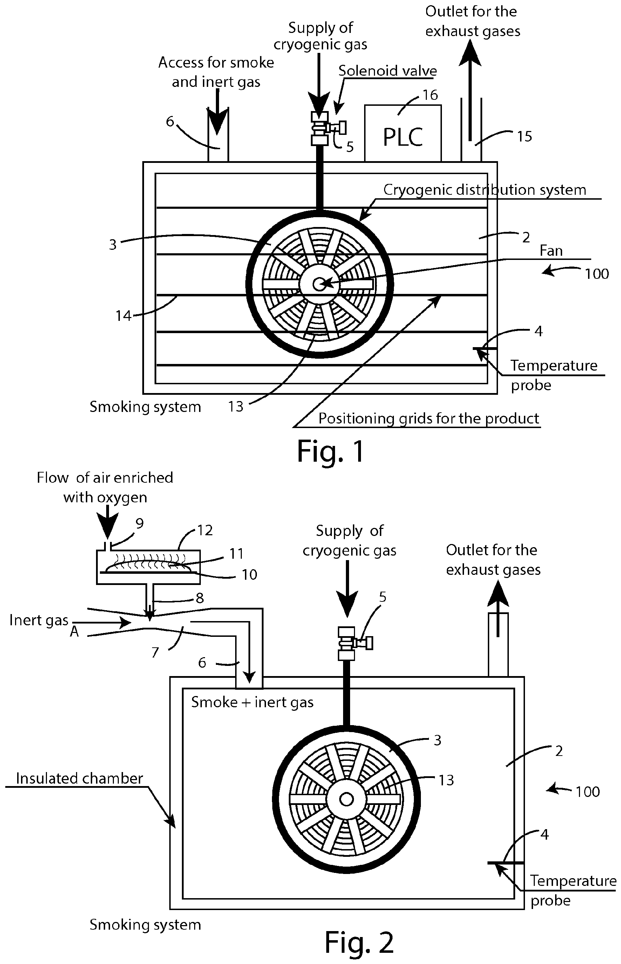

The smoking chamber 2 is a container, which can have various dimensions and is thermally insulated, inside of which is installed a dispenser 3 of inert cryogenic gas (argon and/or nitrogen), controlled by a temperature sensor 4 which activates, by means of a PLC, a solenoid valve 5, which allows the flow of cryogenic gas at 5-10 second intervals. Once the predetermined temperature is reached, which is variable according to the type of product to be smoked, the flow of cryogenic gas is switched off (see in particular Figure 1).

The smoke used for the smoking is introduced through an access 6, together with the inert (nitrogen and/or argon).

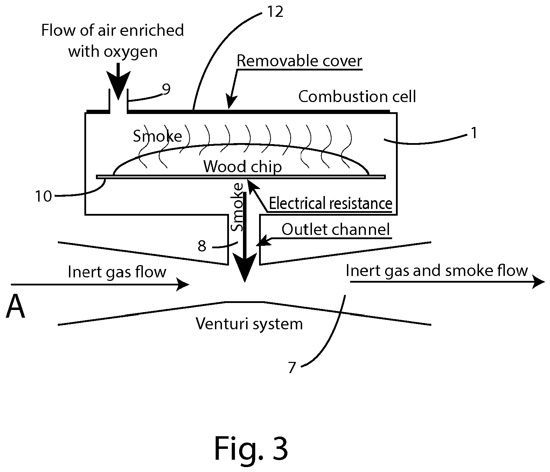

With reference in particular to Figures 2 and 3 of the accompanying drawings, said smoke is produced in an apparatus consisting of the combustion cell 1 and a Venturi system 7, connected to it by means of an outlet channel 8.

A flow of air enriched with oxygen enters the cell 1 through the inlet 9. Said Venturi system draws the smoke from the combustion cell 1 and distributes it inside the smoking chamber 2.

The combustion cell 1 also consist of an isolated container, inside of which there is an electrical resistance 10, above which are placed the wood chips 11.

The electrical resistance 10 is able to burn the chips 11, in the absence of flames.

Above said cell 1 there is a removable cover 12, for inserting the chips 11, for cleaning the resistance 10 and for removing the burnt chips.

Said inlet 9 for the air enriched with oxygen is formed through said cover 12. The air enriched with oxygen has a composition variable between 50% - 80% of nitrogen and 20% - 50% of oxygen, as a function of the type of wood chip used.

As mentioned, below the isolated cell 1 there is the Venturi system 7, which draws the smoke produced in the combustion cell 1, through the outlet channel 8, and introduces it inside the smoking chamber 2.

The negative pressure which is able to draw the smoke is generated by the introduction of the inert gases (arrow A) inside the Venturi system 7.

The smoke introduced into the smoking chamber 2 is immediately cooled by the liquid nitrogen and/or argon introduced inside the chamber 2 by means of said solenoid valve 5, controlled by the PLC, which controls the set temperature.

A system 3 is installed inside the smoking chamber 2 for distribution of the cryogenic gas, equipped with a fan 13, which is able to uniformly distribute the inert gases and the smoke.

Also inside the smoking chamber 2 there are grids 14 for positioning the product to be subjected to smoking.

An outlet 15 for the exhaust gases is also provided above said smoking chamber 2.

The PLC is indicated generically with reference numeral 16 in Figure 1.

The cryogenic smoking process according to the invention uses inert cryogenic gases such as nitrogen and/or argon, these gases being able to lower the temperature of the product to be smoked and of the smoke coming from the combustion cell 1 and keep the smoking chamber 2 di free of oxygen.

The inert cryogenic gases are drawn inside the smoking chamber 2 during the entire smoking process.

Depending on the type of product to be smoked, the temperature of the smoking chamber 2 and of the product is a constant temperature in the range of -5°C to +10°C.

The inert cryogenic gases saturate the smoking chamber 2, in this way preserving the product from oxidisations which alter the nutritional values, such as omega 3.

Moreover, the presence of inert cryogenic gases avoids the browning of an oxidation origin of the products subjected to smoking and the phenomenon of decomposition of the lipidic compounds which are normally generated by the presence of oxygen.

The rapid reduction in temperature prevents the product from undergoing the weight loss caused by evaporation of the intra and extra cellular liquid and allows a considerable reduction in the bacterial proliferation to be obtained, especially of the aerobiosis types.

Also, the absence of oxygen in the smoking chamber 2, together with the presence of nitrogen and/or argon, causes the reduction of the nitrate ion ($NO_3^-$) to nitrite ion ($NO_2^-$) with the formation of $HNO_2$, which is a substance with a marked germicide action, especially with respect to bacteria of the Clostridium type (see, for example, "Chimica degli alimenti" (*Chemistry of foodstuffs*) P. Cappelli, V. Vannucchi).

In order to demonstrate the advantages obtained with the process and system according to the invention, products of the same type have been used for performance of the tests, subjected to the same treatment (salt and sugar for 24 hours in a vacuum).

50% of the dressed products subjected to testing have been smoked with the traditional system, whilst the remainder has been smoked with the process according to the invention.

In particular, a technical report is presented below, prepared by Dr. Pietro Rocculi, a researcher in food product technologies at Bologna University, in which references are made to chemical-physical analyses performed on samples of salmon fillets smoked with the traditional process and with the process according to the invention.

**Prof. Rocculi's Report**

Materials and methods used

**Content of dry substance (%)**

The content of dry substance (%) has been calculated with the gravimetric method considering the difference in weigh before and after drying in an oven at 105 °C, until reaching a constant weight. The percentage of dry substance has been calculated as follows:

$$\text{Dry substance (\%)} = 100 - \frac{m_f - m_d}{m_f} \cdot 100$$

where $m_f$ and $m_d$ are, respectively, the weight (in grams) of wet and dry sample. The analysis has been carried out five times for each sample.

**Colour with Tristimulus colorimeter**

The colour of the smoked salmon samples was measured using a Tristimulus spectrophotometer model Color-Flex (Hunterlab, Virginia, USA). The results have been expressed as L* (luminosity), a* (red/green index) and b* (yellow/blue index) of the CIELab scale. The analysis has been carried out at least five times for each sample.

**Hardness with Texture Analyser dynamometer**

The hardness has been measured using a dynamometer model Texture Analyser HDi 500 (Stable Micro System, Surrey, UK) equipped with 50 kg load cell. A cutting test has bee performed using a Warner Bratzler steel blade with a 60° "V" indentation. The data obtained has been expressed in terms of hardness evaluated with the maximum peak force recorded (N) during cutting in a direction transversal to the muscular fibres of the fillets analysed. The analysis has been carried out at least five times for each sample.

**Water activity (aw)**

The aw has been determined using the Aqualab water activity meter (Decagon Device, USA) and it has been performed at least five times for each sample.

**Statistical analysis**

The significance of the differences of the results obtained has been evaluated using the Statistics 22.0 program (SPSS Inc., Chicago, IL, USA) by analysing the variance (ANOVA) with the Tukey test for $p < 0.05$.

**Results**

Almost all the chemical-physical parameters measured have been found to be significantly different between the sample smoked with the traditional process and the sample smoked according to the invention. With regard to the colour, the innovative smoking has allowed a lighter coloured product to be obtained (higher L* values) and with a lower yellow component (lower b* values), whilst it did not cause significant changes in terms of red index (a*). The differences have probably been due to a greater degradation of the pigments as well as a greater shrinkage of the product, as a result of traditional smoking. With regard to the content of dry substance, the traditional smoking process has promoted a greater dehydration of the product, the water content of which has been approximately 7% lower than the cold smoked sample. The aw values also confirmed this trend; the traditional smoking process in fact reduced the aw to a level of 0.894, whilst the innovative process reduced up to 0.950. This has also translated into a substantial difference in terms of tenderness of the samples; in fact, with regard to the hardness, the product smoked with the traditional method showed a value of approximately twice that obtained with the innovative method.

**Table 1.**

Results of the chemical-physical parameters measured on samples of salmon smoked with the traditional method (Control) and innovative method (Cryo-Smoked).

| | Colour | | | aw | Hardness (N) | ss (%) |
|---|---|---|---|---|---|---|
| | L* | a* | b* | | | |
| Check | 38.68 a (± 1.24) | 15.13 a (± 0.54) | 20.73 b (± 1.75) | 0.894 a (± 0.006) | 22.36 b (± 1.93) | 45.51 b (± 1.18) |
| Cryo-Smoked | 41.39 b (± 1.37) | 16.73 a (± 1.00) | 15.84 a (± 2.85) | 0.950 b (± 0.003) | 12.42 a (± 1.22) | 38.19 a (± 0.61) |
| * Values with different letters are significantly different for $p < 0.05$ | | | | | | |

Microbiological analyses (total mesophyll) have also been carried out, by EptaNord, which indicate the results obtained for the File 17LA07217-EptaNord relative to the sample smoked with the traditional process and for file 17LA07218-EptaNord relative to the sample smoked with the process according to the invention. The results of the tests are stored in the archives of the Applicant.

The results relative to the Ipa and PCB analyses carried out by Epta Nord on the products in question are also stored in the archives of the Applicant.

The products smoked with the process according to the invention have shown considerable improvements with respect to those processed with the traditional processes.

In particular, improvements have been found from the organoleptic point of view, including, a sharper colour, more compact meat, a more intense aroma and a persistent fragrance.

Other advantages obtained with the process according to the invention are chemical type advantages, including, for example, a reduction in the aromatic polycyclic hydrocarbons (APH) and a reduction in the nitrosamines.

Improvements have also been found from the nutritional point of view, due to a greater stability of the fatty acids.

Lastly, from the technological-food product point of view, there is an increase in the shelf-life and a reduction in the weight loss.

The present invention is described by way of example only, without limiting the scope of application, according to its preferred embodiments.

**Claims**

1. Cryogenic smoking process, said process comprising the steps of:

    - arranging the products to be subjected to cryogenic smoking inside an isolated smoking chamber (2), preferably on positioning grids (14);
    - introducing in said chamber (2) inert cryogenic gas, until a pre-determined smoking temperature is reached;
    - introducing the smoking smoke, said smoking smoke being cooled by the cryogenic gas previously introduced in said chamber (2);
    - once the smoking of the product is finished, discharging the cryogenic gas from inside the chamber (2) and extracting the smoked product.

2. Process according to the claim 1, **characterized in that** said cryogenic gas is inertized by an inert gas, in particular argon and/or nitrogen.

3. Process according to one of the previous claims, **characterized in that** the smoking smoke is realized in a combustion cell, within which air enriched with oxygen is introduced.

4. Process according to claim 3, **characterized in that** said air enriched with oxygen has a composition variable between 50% - 80% of nitrogen and 20% - 50% of oxygen.

5. Process according to one of the previous claims, **characterized in that** the smoking smoke is obtained by burning without flame wood chips.

6. System (100) for carrying out the cryogenic smoking process according to claim 1, said system comprising:

    - an isolated smoking chamber (2), provided with positioning means (14) for positioning the product to be subjected to smoking inside the isolated smoking chamber (2), a supply of inert cryogenic gas, said supply being provided with a solenoid valve (5) for introducing said inert cryogenic gas inside the isolated smoking chamber (2) until a pre-determined smoking temperature is reached, a temperature probe (4) to detect that the pre-determined smoking temperature is reached, a cryogenic distribution system (3), and with an access (6) for the smoking smoke and for the inert gas for introducing the smoking smoke inside the isolated smoking chamber (2) and for cooling said smoking smoke by said inert cryogenic gas previously introduced in said chamber (2);
    - a combustion cell (1), provided with a supply (9) for air enriched with oxygen, with a heating system (10), with an outlet (8) for the fumes; and
    - a system (7) for the transfer of fumes from said combustion cell (1) to said smoking chamber (2).

7. System (100) according to the claim 6, **characterized in that** said cryogenic distribution system (3) of said chamber (2) is equipped with a fan (13).

8. System (100) according to one of the claims 6-7, **characterized in that** said solenoid valve (5) is controlled by a PLC.

9. System (100) according to one of the claims 6-8, **characterized in that** said combustion cell (1) is equipped with a removable top cover (12), for inserting the chips, and through said cover (12) the supply (9) for air enriched with oxygen is realized.

10. System (100) according to one of the claims 6-9, **characterized in that** said heating system of said combustion cell (1) is consisting of an electrical resistance (10).

11. System (100) according to one of the claims 6-10, **characterized in that** said system (7) for the transfer of fumes from said combustion cell (1) to said smoking chamber (2) is consisting of a venturi system (7).

**Patentansprüche**

1. Kryogenes Räucherverfahren, wobei das Verfahren folgende Schritte umfasst:

   - Anordnen der Produkte, die der kryogenen Räucherung unterzogen werden sollen, in einer isolierten Räucherkammer (2), vorzugsweise auf Ablagerosten (14);
   - Einbringen von kryogenem Inertgas in die Kammer (2), bis eine vorbestimmte Räuchertemperatur erreicht ist;
   - Einbringen des Räucherrauchs, wobei der Räucherrauch durch das zuvor in die Kammer (2) eingebrachte kryogene Gas gekühlt wird;
   - sobald das Räuchern des Produkts beendet ist, das kryogene Gas aus dem Inneren der Kammer (2) ablassen und das geräucherte Produkt herausnehmen.

2. Verfahren nach Anspruch 1, **dadurch gekennzeichnet, dass** das kryogene Gas durch ein Inertgas, insbesondere Argon und/oder Stickstoff, inertisiert wird.

3. Verfahren nach irgendeinem der vorhergehenden Ansprüche, **dadurch gekennzeichnet dass** der Räucherrauch in einer Verbrennungszelle erzeugt wird, in die mit Sauerstoff angereicherte Luft eingebracht wird.

4. Verfahren nach Anspruch 3, **dadurch gekennzeichnet dass** die mit Sauerstoff angereicherte Luft eine zwischen 50% - 80% Stickstoff und 20% - 50% Sauerstoff variable Zusammensetzung aufweist.

5. Verfahren nach irgendeinem der vorhergehenden Ansprüche, **dadurch gekennzeichnet dass** der Räucherrauch durch flammenfreie Verbrennung von Holzchips erhalten wird.

6. System (100) zur Ausführung des kryogenen Räucherverfahrens nach Anspruch 1, wobei das System Folgendes umfasst:

   - eine isolierte Räucherkammer (2), die mit Ablagemitteln (14) zum Ablegen des zu räuchernden Produkts in der isolierten Räucherkammer (2) versehen ist; eine Zuführung von kryogenem Inertgas, wobei die Zuführung mit einem Magnetventil (5) versehen ist, um das kryogene Inertgas in die isolierte Räucherkammer (2) einzubringen, bis eine vorbestimmte Räuchertemperatur erreicht ist; eine Temperatursonde (4) zur Erkennung, dass die vorbestimmte Räuchertemperatur erreicht wurde; ein kryogenes Verteilungssystem (3); und mit einem Einlass (6) für den Räucherrauch und für das Inertgas, um den Räucherrauch in die isolierte Räucherkammer (2) einzubringen und den Räucherrauch mit dem kryogenen Inertgas abzukühlen, das vorher in die Kammer (2) eingebracht wurde;
   - eine Verbrennungszelle (1), die mit einer Zuführung (9) für mit Sauerstoff angereicherte Luft; mit einem Heizsystem (10); mit einem Auslass (8) für den Rauch versehen ist; und
   - ein System (7) zur Übertragung des Rauches von der Verbrennungszelle (1) in die Räucherkammer (2).

7. System (100) nach Anspruch 6, **dadurch gekennzeichnet, dass** das kryogene Verteilungssystem (3) der Kammer (2) mit einem Ventilator (13) ausgestattet ist.

8. System (100) nach irgendeinem der Ansprüche 6-7, **dadurch gekennzeichnet, dass** das Magnetventil (5) von einer PLC gesteuert wird.

9. System (100) nach irgendeinem der Ansprüche 6-8, **dadurch gekennzeichnet, dass** die Verbrennungszelle (1) mit einer oberen abnehmbaren Abdeckung (12) zum Einlegen der Holzchips ausgestattet ist, und dass durch die Abdeckung (12) die Versorgung (9) von mit Sauerstoff angereicherten Luft realisiert wird.

10. System (100) nach irgendeinem der Ansprüche 6-9, **dadurch gekennzeichnet, dass** das Heizsystem der Verbrennungszelle (1) aus einem elektrischen Widerstand (10) besteht.

11. System (100) nach irgendeinem der Ansprüche 6-10, **dadurch gekennzeichnet, dass** das System (7) zur Übertragung des Rauches von der Verbrennungszelle (1) in die Räucherkammer (2) aus einem Venturi-System (7) besteht.

**Revendications**

1. Procédé de fumage cryogénique, ledit procédé comprenant les étapes de :

   - disposer les produits à soumettre au fumage cryogénique à l'intérieur d'une chambre de fumage isolée (2), de préférence sur des grilles de positionnement (14) ;
   - introduite dans ladite chambre (2) du gaz cryogénique inerte, jusqu'à ce qu'une température de fumage prédéterminée soit atteinte ;
   - introduire la fumée de fumage, ladite fumée de fumage étant refroidie par le gaz cryogénique préalablement introduit dans ladite chambre (2) ;
   - une fois que le fumage du produit est terminé, décharger le gaz cryogénique de l'intérieur de la chambre (2) et extraire le produit fumé.

2. Procédé selon la revendication 1, **caractérisé en ce que** ledit gaz cryogénique est rendu inerte par un gaz inerte, en particulier argon et/ou azote.

3. Procédé selon l'une des revendications précédentes, **caractérisé en ce que** la fumée de fumage est réalisée dans une cellule de combustion, à l'intérieur de laquelle est introduit de l'air enrichi en oxygène.

4. Procédé selon la revendication 3, **caractérisé en ce que** ledit air enrichi en oxygène a une composition variable entre 50 % - 80 % d'azote et 20 % - 50 % d'oxygène.

5. Procédé selon l'une des revendications précédentes, **caractérisé en ce que** la fumée de fumage est obtenue en brûlant sans flamme des copeaux de bois.

6. Système (100) pour effectuer le procédé de fumage cryogénique selon la revendication 1, ledit système comprenant :

   - une chambre de fumage isolée (2), fournie avec des moyens de positionnement (14) pour positionner le produit à soumettre au fumage à l'intérieur de la chambre de fumage isolée (2), une alimentation de gaz cryogénique inerte, ladite alimentation étant fournie avec une vanne solénoïde (5) pour introduire ledit gaz cryogénique inerte à l'intérieur de ladite chambre de fumage isolée (2) jusqu'à ce qu'une température de fumage prédéterminée soit atteinte, une sonde de température (4) pour détecter que la température de fumage prédéterminée est atteinte, un système de distribution cryogénique (3), et avec un accès (6) pour la fumée de fumage et pour le gaz inerte pour introduire la fumée de fumage à l'intérieure de la chambre de fumage isolée (2) et pour refroidir ladite fumée de fumage par ledit gaz cryogénique inerte préalablement introduit dans ladite chambre (2) ;
   - une cellule de combustion (1), fournie avec une alimentation (9) d'air enrichi en oxygène, avec un système de réchauffement (10), avec une sortie (8) pour les émanations ; et
   - un système (7) pour le transfert d'émanations de ladite cellule de combustion (1) à ladite chambre de fumage (2).

7. Système (100) selon la revendication 6, **caractérisé en ce que** ledit système de distribution cryogénique (3) de ladite chambre (2) est équipé d'un ventilateur (13).

8. Système (100) selon l'une des revendications 6-7, **caractérisé en ce que** ladite vanne solénoïde (5) est contrôlée par un PLC.

9. Système (100) selon l'une des revendications 6-8, **caractérisé en ce que** ladite cellule de combustion (1) est équipée d'une couverture supérieure amovible (12) pour insérer les copeaux, et à travers ladite couverture (12) est réalisée l'alimentation (9) d'air enrichi en oxygène.

**10.** Système (100) selon l'une des revendications 6-9, **caractérisé en ce que** ledit système de réchauffement de ladite cellule de combustion (1) consiste en une résistance électrique (10).

**11.** Système (100) selon l'une des revendications 6-10, **caractérisé en ce que** ledit système (7) pour le transfert d'émanations de ladite cellule de combustion (1) à ladite chambre de fumage (2) consiste en un système venturi (7).

Outlet for the
exhaust gases

Supply of
cryogenic gas

Access for smoke
and inert gas

Solenoid valve

16

PLC

5

6

15

Cryogenic distribution system

3

2

Fan

100

14

4

Temperature
probe

Smoking system   13

Positioning grids for the product

Fig. 1

Flow of air enriched
with oxygen

Supply of
cryogenic gas

Outlet for the
exhaust gases

9   12

11

10

8

Inert gas

A

5

7   6

Smoke + inert gas

3

Insulated chamber

13

2

100

4

Temperature
probe

Smoking system

Fig. 2

Flow of air enriched
with oxygen

12

Removable cover

Combustion cell

9

Smoke

Wood chip

1

10

Electrical resistance

Smoke

Outlet channel

8

Inert gas flow

Inert gas and smoke flow

A

Venturi system

7

Fig. 3

## REFERENCES CITED IN THE DESCRIPTION

**Patent documents cited in the description**

- EP 2005831 A
- JP H0361446 B
- US 3747513 A
- WO 9625854 A